Europäisches Patentamt

European Patent Office

Office européen des brevets

(19)

(11) Publication number: **0 000 690**
**B1**

(12) **EUROPEAN PATENT SPECIFICATION**

(45) Date of publication of patent specification: **19.10.83**

(51) Int. Cl.³: **G 03 B 41/16**

(21) Application number: **78100141.7**

(22) Date of filing: **13.06.78**

(54) **Radiophotographic unit.**

(30) Priority: **13.06.77 US 805815**

(43) Date of publication of application:
**21.02.79 Bulletin 79/4**

(45) Publication of the grant of the patent:
**19.10.83 Bulletin 83/42**

(84) Designated Contracting States:
**BE DE FR GB**

(56) References cited:
**DE - A - 2 123 208**
**FR - A - 617 604**
**US - A - 3 233 101**

(73) Proprietor: **E.I. DU PONT DE NEMOURS AND COMPANY**
**Legal Department 1007 Market Street**
**Wilmington Delaware 19898 (US)**

(72) Inventor: **Schmidt, Gunter**
**20645 Eagle Pass Drive**
**Malibu, California 90265 (US)**

(74) Representative: **Abitz, Walter, Dr.-Ing. et al,**
**Abitz, Morf, Gritschneder P.O. Box 86 01 09**
**D-8000 München 86 (DE)**

Courier Press, Leamington Spa, England.

## Radiophotographic unit

The invention relates to a radiophotographic unit for use in taking X-rays, including a mounting frame, a flexible X-ray transparent front sheet, a backing plate behind the front sheet, at least one intensifier screens and pressing means which hold the film to the at least one intensifier screen.

The image of an X-ray film can be enhanced by the use of one or two intensifier screens lying intimately against one face or opposite faces of the film. A radiophotographic unit is known in accordance with the prior art portion of claim 1 (DE—A—2,123,208) in which one side of the front sheet is held to the main frame. The other side of the front sheet is held by springs and the front sheet is moved towards the curved backing plate by cylinders and rods. There is a danger that successive films will when exposed not be located exactly in the same manner in view of the asymmetric mounting of the front sheet which can cause relative movement between the front sheet and the backing plate when both are pressed together.

US—A—3,233,101 discloses a radiophotographic unit with pressing means which press the film between two rigid plates. One of these plates is moved by rollers. The rollers engage the rigid pressure plate near the corners so that the pressure force is concentrated on the engagement points of the rollers and there is the danger that in the middle area of the pressure plates air is entrapped between the intensifier screens and the X-ray film sheet.

GB—A—1,362,772 discloses a radiophotographic unit where pressure is applied to the middle of the backing plate to curve it towards the front plate to clamp the film. The backing plate includes cam followers which ride along cam surfaces to press the backing plate against the front plate. Because of this there is relative movement of the backing plate versus the front plate in the plane of the backing plate so that there is the danger of misalignment of the X-ray film.

The invention solves the problem of how to design a radiophotographic unit of relatively simple design, which can hold a film in intimate contact with intensifier screens during exposure, and which enables the insertion of a film between the intensifier screens and the removal therefrom in a simple manner. The pressing means for holding the film against the intensifier screens includes a flexibly resilient backing plate behind the film-screen sandwich and a flexible front sheet lying in front of the film-screen sandwich, with the opposite sides of the flexible sheet fastened to a mounting frame.

With the opposite sides of the flexible sheet held in the mounting frame, a vertical pressing member is moved against the middle of the backing plate to bend it forward and push the film-screen sandwich into a curve that holds the film and screens in intimate contact. When the pressing member is moved back, a film sheet can be fed between the intensifier screens or an exposed film sheet can be allowed to drop out from between the screens by withdrawing supporting pins that would otherwise support the film.

The film dispenser is subject matter of European Patent Application 80 107 552.4.

Description of drawings

Figure 1 is a partial perspective view of a chest X-ray unit constructed in accordance with the present invention shown with a portion of the lighttight housing cut away;

Figure 1A is a perspective view of a portion of the unit of Figure 1, showing the manner of construction of the exposure portion thereof;

Figure 2 is a partial rear perspective view of the unit of Figure 1, showing the mechanism thereof;

Figure 3 is a view taken of the line 3—3 of Figure 2;

Figure 4 is a view taken on the line 4—4 of Figure 3;

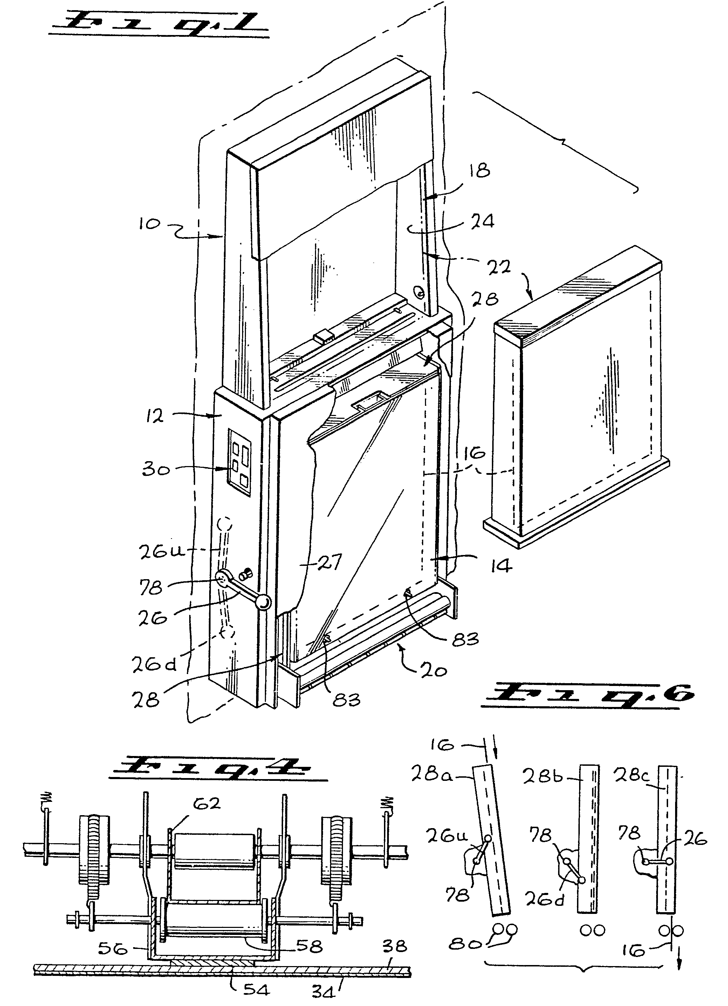

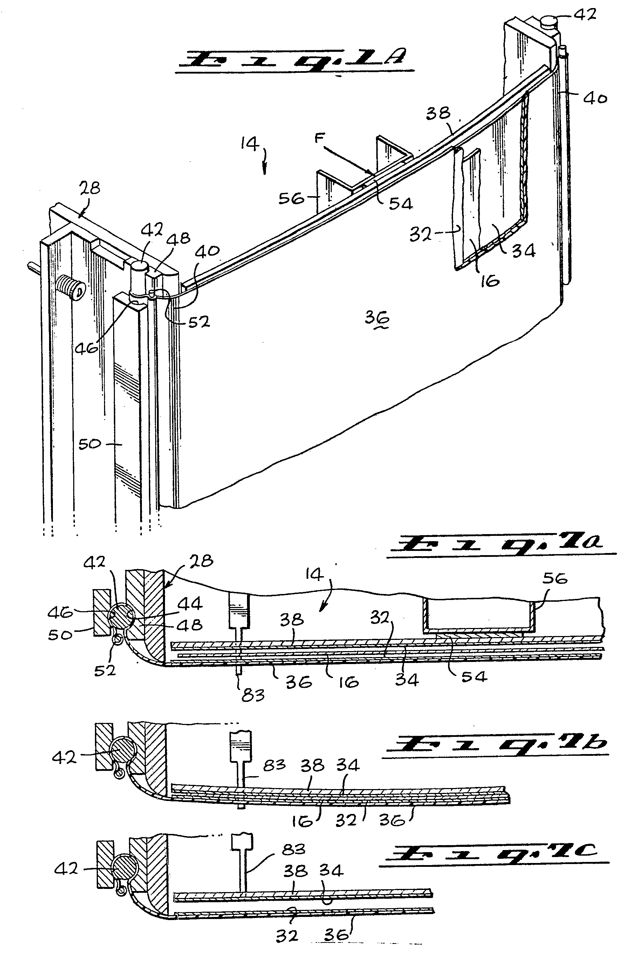

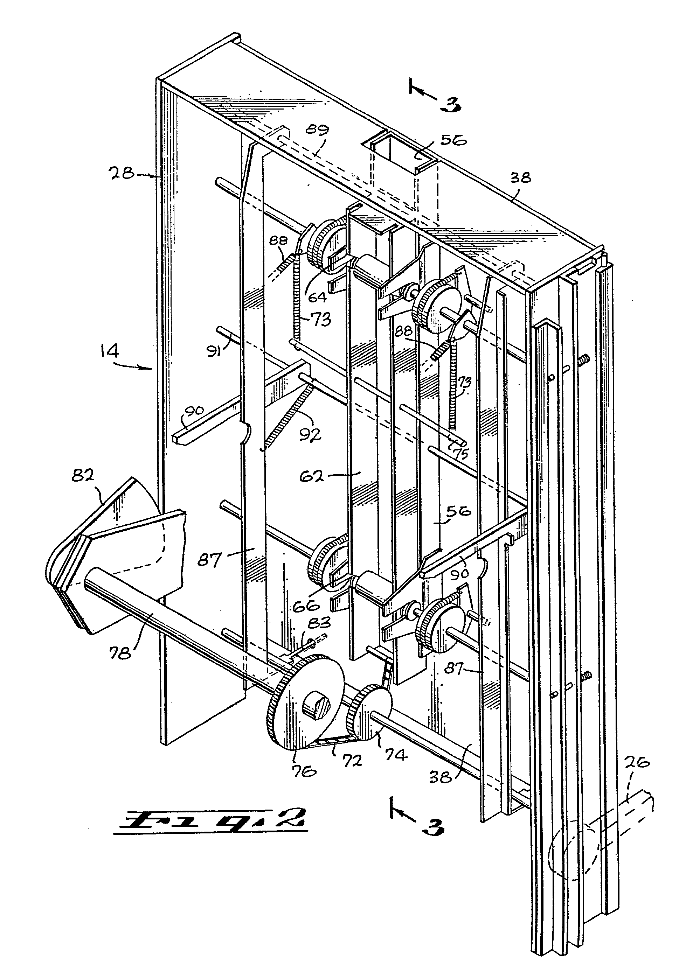

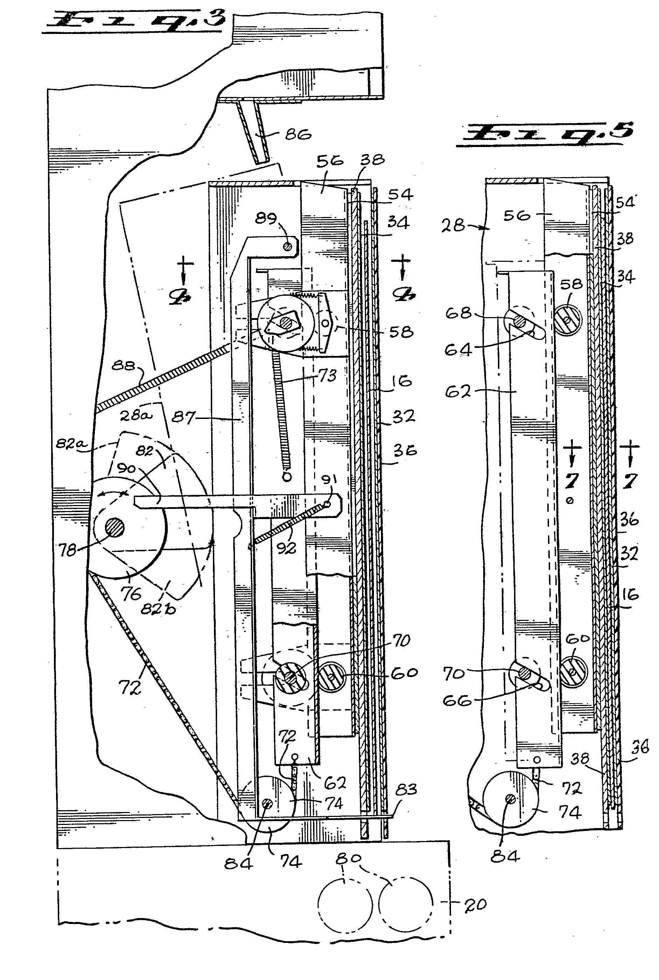

Figure 4 is a view taken on the line 4—4 of Figure 3;

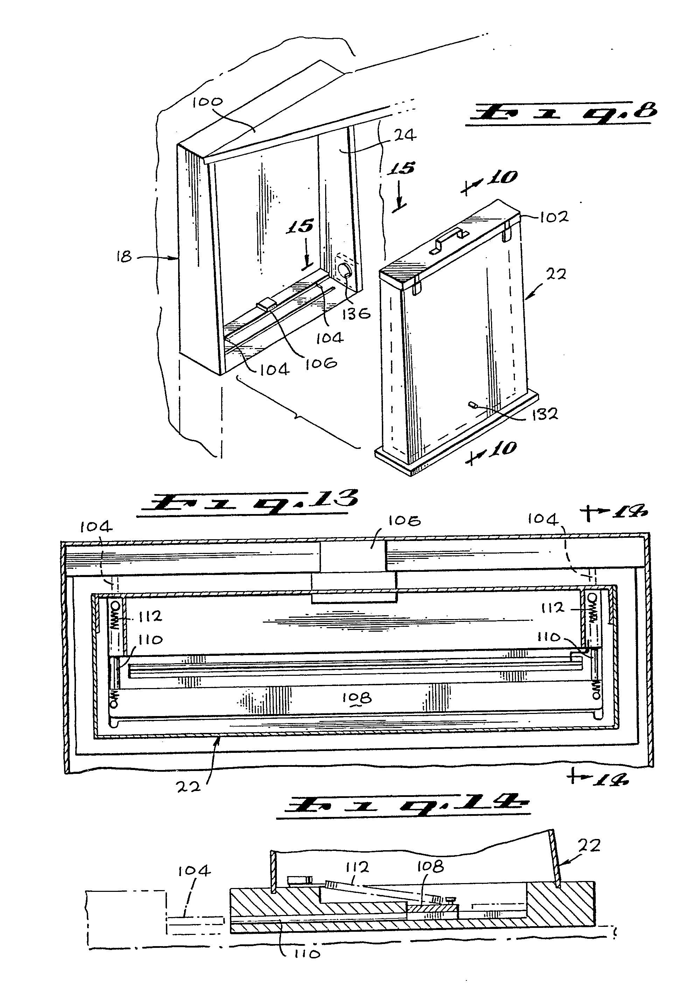

Figure 5 is a partial view of the apparatus of Figure 3, showing the manner in which the pressing member operates;

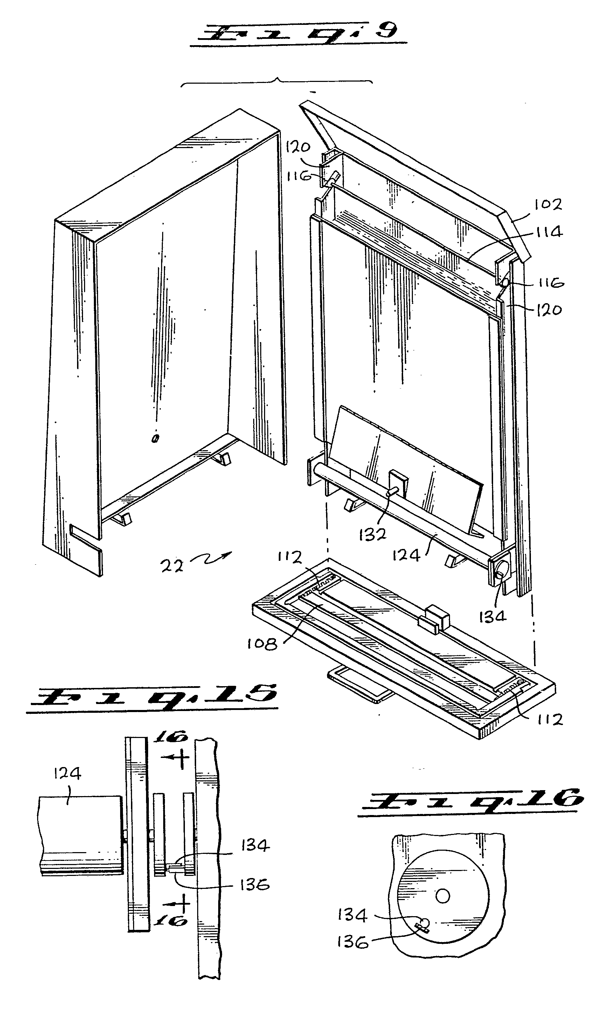

Figure 6 illustrates three stages in the operation of the unit of Figure 1;

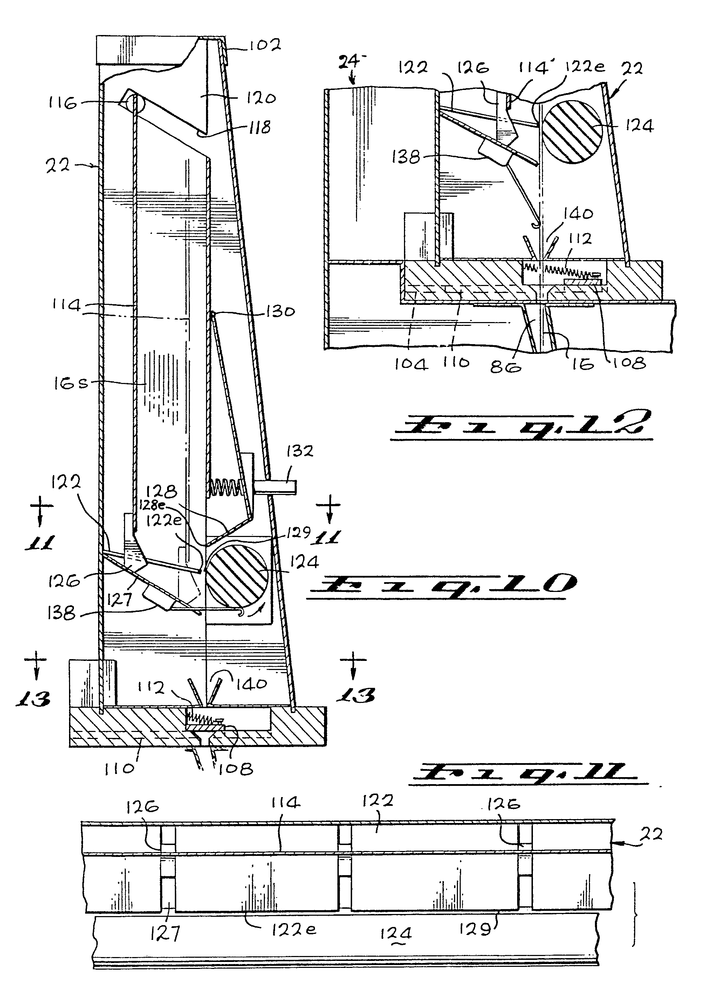

Figures 7a—7c illustrate views taken on the line 7—7 of Figure 5, the three views showing the unit at different stages of its operation;

Figure 8 is an exploded perspective view of the dispenser portion of the unit of Figure 1, showing a film magazine outside of the receiver;

Figure 9 is an exploded perspective view of the film magazine of Figure 8;

Figure 10 is a view taken on the line 10—10 of Figure 8;

Figure 11 is a view taken on the line 11—11 of Figure 10;

Figure 12 is a partial view of the dispenser portion of Figure 10, showing it in a condition wherein a film is almost completely dispensed from the apparatus;

Figure 13 is a view taken on the line 13—13 of Figure 10;

Figure 14 is a view taken on the line 14—14 of Figure 13;

Figure 15 is a view taken on the line 15—15 of Figure 8;

Figure 16 is a view taken on the line 16—16 of Figure 15.

Description of apparatus

Fig. 1 illustrates a chest X-ray unit 10 which includes a main frame 12, an exposure apparatus 14 mounted along the frame for holding a sheet of film 16, a dispenser 18 above the exposure apparatus for dispensing the film into the exposure apparatus, and an exposed film receiver 20 located below the exposure apparatus for receiving the exposed film. The unit is prepared for operation by first loading a bulk film magazine 22 into a magazine-holding portion 24 of the dispenser. Then, a handle 26 on the main frame is pivoted to an upward position 26u to tip back a mounting frame 28 of the exposure apparatus 14 to a position for receiving a film from the dispenser, and a control on panel 30 is operated to cause the dispensing of a film into the exposure apparatus. After the film has been received, the handle 26 is moved into a downward position 26d which causes the film 16 to be held in the exposure apparatus closely against the intensifier screens. A patient then can be positioned in front of a cover 27 on the exposure apparatus 14 and an exposure made. Finally, the handle is moved up to its central position 26 and the film 16 drops down into the receiver 20.

Fig. 7a illustrates the arrangement of elements adjacent to film 16 in the exposure apparatus 14. The film 16 is sandwiched between a pair of intensifier screens 32, 34, and the screen and film sandwich is, in turn, sandwiched between a flexible front sheet 36 and a resilient backing plate 38. The intensifier screens can be permanently attached to the flexible front sheet and the backing plate, respectively. In order to obtain a uniformly full exposure of the film 16 using a minimal level of X-rays, the intensifier screens 32, 34 must be held in face-to-face contact with the film at all areas of the film. This must be accomplished without using a metal plate or other similar member in front of the film that could adsorb a significant portion of X-rays.

Fig. 1A illustrates the basic manner in which the film 16 is held tightly to all areas of the intensifier screens 32, 34. The backing plate 38 is constructed of a flexibly resilient material such as an 0.1 inch (2.54 mm) thick magnesium plate. The front sheet 36 is constructed of a tough, flexible plastic such as Mylar® polyester film. The opposite sides 40 of the front sheet are wrapped somewhat more than 180° around a pair of vertical mounting rods 42. Each mounting rod is held in a hole presented by a pair of grooves 44, 46 formed respectively in inner and outer bars 48, 50 of the mounting frame 28. The extreme sides of the front sheet 36 are wrapped around thin retaining rods 52 which more securely hold the sides of the front sheet around the mounting rods 42. An elongated vertical pressing bar 54 extends behind the middle of the backing plate, halfway between the opposite sides of the front sheet. When the pressing bar 54 is moved forwardly, in the direction of arrow F, it bends the backing plate 38. Since the opposite sides 40 of the front sheet 36 are prevented from moving forwardly, the backing plate, intensifier screens, film and front sheet are all pushed into a gentle curve (Fig. 7b), with the intensifier screens 32, 34 and film 16 between them pressed into intimate contact at all areas of the film. The intensifier screens then can aid in achieving uniformly full exposure of the film.

The pressing bar 54 is attached to a first elongated channel member 56 which has a channel-like form. As shown in Fig. 5, the first elongated member 56 carries a pair of rollers 58, 60 which bear against a rearward channel member 62. The second elongated member 62 is also in the form of a channel and has a pair of inclined slots 64, 66 at its upper and lower ends which receive a pair of cams 68, 70 fixed to the mounting frame. In addition, a chain 72 is provided to pull down the second elongated member 62 against the bias of springs 73 (Figs. 2 and 3). Springs 73 extend between the fixed rod that mounts cams 68 and a rod 75 that extends through the flanges of the second elongated member 62. When the second elongated member 62 is pulled down, the cams 68, 70 force the second elongated member to move forward, to push the rollers 58, 60 forward, and therefore to move the first elongated member 56 and pressing bar 54 forwardly.

Fig. 2 shows that the chain 72 that pulls down the second elongated member 62 extends around a rotatable pulley 74 and up to a tensioning pulley 76. The tensioning pulley 76 is fixed to an operating shaft 78 to which the handle 26 is fixed. Thus, when the handle 26 is moved downwardly, the chain 72 is pulled to cause the film and the intensifier screens to be bowed in the same direction as the backing plate 38 and into intimate contact.

Fig. 6 shows the three positions 28a, 28b, 28c of the mounting frame. At 28a, the top of the mounting frame is tilted back to receive the film 16. At position 28b, the mounting frame is vertical and the intensifier screens are held tightly against the film in preparation for exposure of the film. At 28c, the mounting frame is vertical, but the film is loosely disposed between the intensifier screens so that the film 16 can drop down between a pair of rollers 80 in film receiver 20.

Fig. 3 shows a cam 82 which is fixed to the operating shaft 78 and which controls backward pivoting of the mounting frame 28. When the handle 26 is turned to position 26u, shaft 78 rotates and the cam 82 assumes position 82a; then, the mounting frame 28 can pivot back about an axis 84 to the position 28a. At that position, the space between the intensifier screens is aligned with a guideway 86 through which a sheet of film is dispensed. Springs 88 bias the top of the mounting frame rearwardly to assure such tipping. When the shaft 78 is turned so that the cam 82 is at the position as shown by the continuous line, the cam forces the mounting frame upright. However, even at this cam position, the shaft 78 is not turned far enough for the chain 72 to be pulled tight. When the shaft 78 is turned so the cam is at position 82b, the cam still holds the mounting frame upright, but the tensioning pulley 76 on the shaft is then rotated far enough to pull the chain 72 tightly enough to pull down the second elongated member 62 so as to cause its forward movement that holds the film in intimate contact with the intensifier screens. After exposure of a film, the handle 26 and cam 82 are moved to their middle position and, as shown in Fig. 7c, a pair of film-holding pins 83 are moved back to allow the film 16 to drop into the exposed film receiver 20 (Fig. 1).

Pins 83 extend laterally from arms 87 that are pivoted on a shaft 89. Arms 87 have tabs that engage stops on catches 90 that are pivoted on a shaft 91. As the elongated members 56, 62 are moved rearwardly, after an exposure, catches 90 pivot arms 87 sufficiently to move pins 83 out from beneath the exposed film 16 (Fig. 7c). After the exposed film has dropped to receiver 20, the operating handle can be moved to position 26u. With the mounting frame in position 28a, another film can be dispensed through guideway 86. As the frame moves to position 28a, the ends of catches 90 engage shaft 78 and the catches are pivoted sufficiently to move the stops away from the tabs on arms 87. When freed in this manner, arms 87 swing forwardly in response to the action of springs 92 and pins 83 move into their film-supporting position (Fig. 7a). When a film has been dispensed, the operating handle is moved to position 26d. As the handle moves, the elongated members 56, 62 move forward, and the intensifier screens move together (Fig. 7b). During these movements, the stops on catches 90 fall in behind the tabs on arms 87. With the handle in position 26d, the intensifier screens 32, 34, with the film 16 therebetween, can lie at least about three inches forward of the dispenser 18, or at least the bottom portion thereof, where the head of a patient would be positioned during the taking of a chest X-ray.

Following an exposure, handle 26 is moved to its central position. Rearward movement of elongated members 56, 62, responsive to the action of springs 73, also moves catches 90, arms 87 and pins 83 rearwardly. As noted previously, withdrawal of the pins 83 (Fig. 7c) releases the exposed film to receiver 20.

Figs. 8—16 illustrate details of the film dispenser 18 which dispenses one film at a time into the exposure apparatus. As shown in Fig. 8, the holding portion 24 of the dispenser has a cover 100 that can be swung open to receive the film-holding magazine 22. The film magazine 22 has a lid 102 at the top that can be opened to receive a stack of film sheets in a darkroom and which then can be closed to make the magazine lighttight. As the magazine 22 is installed in the holding portion 24, it encounters a pair of pins 104 that open a light seal at the bottom and a receptacle 106 that receives a mating plug on the magazine. Fig. 10 illustrates the light seal 108 at the bottom of the magazine 22, and shows the pair of rods 110 that are attached to the light seal. Fig. 12 illustrates the magazine 22 installed in the holder portion 24 of the dispenser, showing how the pins 104 on the holder depress the rods 110 to slide the light seal 108 against biasing of springs 112 so that a film sheet 16 can pass down through the dispenser.

As illustrated in Fig. 10, the magazine 22 includes a vertical pusher plate 114 whose upper end carries a pair of guides 116 that can move forwardly along downwardly inclined guideways 118 in a pair of guide plates 120. The pusher plate 114 is therefore urged by gravity to move forward, to push a stack of film 16S forwardly and down along an inclined support plate 122. As the film moves forward and down the support plate 122, the film nearest the support is caught between a dispenser roller 124 and blocks 126 at the bottom of the pusher plate. The blocks 126, which are especially useful for pushing the last films of the stack into the roller, are constructed of low friction material such as a Delrin® acetal resin. The low friction material of the blocks 126 aids them in sliding down along a lower support plate 127 and in assuring that when the blocks push the last film against the drive roller 124 the blocks do not retard the film from moving down.

The forward edge 122e of the upper support plate 122 is accurately spaced from the drive roller 124 to form a throat 129 between them that permits only one sheet to pass down through the throat. Thus, for film sheets of 0.254 mm thickness, the edge 122e may be spaced a distance such as twelve mils 0.305 mm from the roller. Also the edge 122e may be formed of a low friction material such as a Teflon® fluorocarbon resin to facilitate the passage of film thereby.

The magazine is normally loaded with film in a darkroom by laying the holding portion horizontally and then laying a stack of film on the pusher plate 114. When the holding portion is turned to the vertical as shown in Fig. 10, or is moved around, it is possible for more than one sheet to be pushed into the space above the support plate edge 122e and the roller 124. In order to avoid jamming of film, a backup member 128 is provided which can push the stack of film rearwardly, to push back sheets which have started to gather in and above throat space 129 and the roller. The backup member 128 is pivotally mounted at 130 and has a button 132 protruding from the film magazine to enable a technician to press the button after he has loaded the magazine 22 in holding portion 24. The backup member is also useful in that when its end 128e pushes back the stack and quickly releases it, the member bends the sheets and "shakes up" the stack. Any film sheets which have not fallen down firmly onto the support plate 122 will do so, and the film sheets will lie in a more uniform arrangement for reliable dispensing.

When the film magazine 22 has been installed in the holding portion 24 of dispenser 18, a drive pin 134 (Fig. 15) at the end of the drive roller 124 lies in the path of a drive tab 136 which lies on a motor driven wheel. When a proper button on the control panel 30 of the unit is depressed, the roller 124 is rotated, as indicated in Fig. 10, to move down one film sheet past a microswitch 138, the thin arm of the microswitch deflecting out of the way of the film. The film then passes through a guideway 140 and through the guideway 86 into the exposure apparatus 14. Microswitch 138 is connected to a power source and to control panel 30 through receptacle 106.

The combination of the support plate edge 122e which is accurately spaced from the roller 124, the pusher plate 114 which holds the film upright and gently pushes it against the roller, and the backup member 128 which can push back and slightly bend the stack to help avoid sticking of the sheets to one another, all combine to assure regularity and evenness in the stack and therefore reliable feeding of only one sheet at a time past the roller. If a sheet is not fed, which is sensed by lack of operation of the microswitch 138, the technician can back up and slightly bend the stack once or twice, and again operate the roller to dispense a film sheet. Thus, by assuring that the sheets are well positioned in the magazine, uniform dispensing of the sheets is achieved.

Accordingly, the invention provides an X-ray unit which enables the daylight loading of one sheet at a time into an exposure apparatus and the tight holding of that film sheet between intensifier screens in the exposure apparatus, all with a relatively simple and low cost apparatus. The close holding of the film sheet between the intensifier screens is accomplished by the use of a flexible plastic sheet, whose opposite sides are securely held, a resilient backing plate, and a pressing bar that pushes along the center line of the resilient backing plate to deform it forwardly. The mounting frame that holds the flexible front sheet, backing plate, and pressing bar is pivotally mounted to enable its top to pivot back to receive a new sheet of film from a dispenser located far enough behind the exposure apparatus to avoid interference with the taking of chest X-rays. The combination of a pusher plate and backup member which assure a uniformly held stack of films sheets, allows for reliable dispensing of one sheet at a time.

## Claims

1. A radiophotographic unit comprising:
a mounting frame (28),
a flexible X-ray transparent front sheet (36) the opposite sides (40) of which are held in the mounting frame (28),
a backing plate (38) lying behind and normally spaced from the front sheet (36),
at least one intensifier screen (32, 34) positioned between the front sheet (36) and the backing plate (38) to lie in face-to-face contact with a sheet of film (16) and
pressing means which hold the film (16) tightly to all areas of the intensifier screen (32, 34), characterized
in that the opposite sides (40) of the front sheet (36) are held such that they are prevented from forward movement;
in that the backing plate (38) is flexibly resilient and
in that the pressing means includes a first elongated member (56) behind the backing plate (38) extending the length of the backing plate (38) so that when the first elongated member (56) is pressed towards the backing plate (38), the backing plate (38) is bent towards the intensifier screen (32, 34) and the first elongated member (56) is then moved away from the backing plate (38) whereby the film (16) is released.

2. A unit as claimed in claim 1, in which
the first elongated member (56) carries rollers (58, 60) at its end portions and
in that the pressing means include further a second elongated member (62) bearing against the rollers (58, 60) and supported on the mounting frame (28) to move at an incline while pressing on the rollers (58, 60) and means (72) connected to the second elongated member (62) for pulling it along the extension of the first and second elongated members (56, 62) and forward against the rollers (58, 60).

3. The unit as claimed in claim 2, including:
a main frame (12);
a film dispenser (18) vertically mounted on the main frame (12) above the mounting frame (28), said dispenser (18) having a magazine (22) for holding a plurality of film sheets (16) and having a mechanism for dispensing a film sheet (16) downwardly through an opening near the bottom of said dispenser; and wherein
said mounting frame (28) is pivotally mounted on said main frame (12) about a tipping axis (84) passing horizontally through the lower half of said mounting frame (28), to permit the upper end of said mounting frame (28) to tip back from an upright position (28b) to a receiving position (28a) wherein the space between said backing plate (38) and front sheet (36) is aligned with said opening to receive a film (16) therefrom;
springs (88) for urging said mounting frame (28) to tip back to said receiving position (28a);
a shaft (78) pivotally mounted on said main frame (12) and carrying a cam (82) at a level above said tipping axis (84), said cam (82) being movable to force said mounting frame (28) to said upright position (28b) or to allow said mounting frame (28) to tip back, when said shaft (78) is respectively turned to a first orientation or a second orientation; and

the pulling means (72) being fixed to the shaft (78) and taut when the shaft (78) is turned to the first orientation to move the mounting frame (28) upright and the tension in the pulling means (72) is released when the shaft (78) is turned to the second orientation to tip said mounting frame (28) back, whereby to automatically allow separation of the backing plate (38) and front sheet (36) when they are tipped back to receive a film sheet (16).

4. The unit as claimed in claim 1, in which the opposite sides (40) of the front sheet (36) are wrapped around a corresponding rod (42) each of which is held in a hole formed by a pair of grooves (44, 46) formed respectively in inner and outer bars (48, 50) of the mounting frame (28).

5. A X-ray unit as claimed in claim 3, which includes a cover (27) in front of which a patient can be positioned whose chest X-ray is being taken and

in which the dispenser (18) also includes means for dispensing one film (16) at a time through the opening which means is operable to separate the intensifier screens (32, 34) and pivot them about an axis (84) lower than the middle of the intensifier screens (32, 34) to move the upper ends of the same rearwardly to a position (28a) in line with the opening to receive a film (16) between the intensifier screens (32, 34).

**Patentansprüche**

1. Eine Vorrichtung für die Röntgenfotografie, mit

einem Montagerahmen (28),

einer flexiblen, für Röntgenstrahlen transparenten Frontplatte (36), deren gegenüberliegende Ränder (40) in dem Montagerahmen (28) festgehalten sind,

einer Stützplatte (38), die hinter und im Ruhezustand im Abstand von der Frontplatte (36) liegt,

wenigstens einer Verstärkerfolie (32, 34), die zwischen der Frontplatte (36) und der Stützplatte (38) angeordnet ist und in flächenhaftem Kontakt mit einem Filmblatt (16) liegt und

Andruckeinrichtungen, die den Film (16) eng anliegend an alle Bereiche der Verstärkerfolie (32, 34) halten, dadurch gekennzeichnet,

dass die gegenüberliegenden Ränder (40) der Frontplatte (36) so festgehalten sind, dass sie an einer Bewegung nach vorne gehindert werden;

dass die Stützplatte (38) flexibel federnd ist und

dass die Andruckeinrichtungen hinter der Stützplatte (38) ein erstes längliches Bauteil (56) aufweisen, das sich über die Länge der Stützplatte (38) erstreckt, so dass, wenn das erste längliche Bauteil (56) gegen die Stützplatte (38) gedrückt wird, die Stützplatte (38) zur Verstärkerfolie (32, 34) hin gebogen wird und das erste längliche Bauteil (56) dann von der Stützplatte (38) weg bewegt wird, wodurch der Film (16) freigeben wird.

2. Eine Vorrichtung wie in Anspruch 1 beansprucht, bei der

das erste längliche Bauteil (56) an seinen Enden Rollen (58, 60) trägt und

die Andruckeinrichtungen ferner ein zweites längliches Bauteil (62) aufweisen, das sich gegen die Rollen (58, 60) abstützt und so an dem Montagerahmen (28) befestigt ist, dass es sich auf einer schiefen Ebene bewegt, während es gegen die Rollen (58, 60) drückt, sowie Einrichtungen (72), die mit dem zweiten länglichen Bauteil (62) verbunden sind, um es längs der Erstreckung des ersten und zweiten länglichen Bauteils (56, 62) und nach vorne gegen die Rollen (58, 60) zu ziehen.

3. Die Vorrichtung, wie in Anspruch 2 beansprucht, mit

einem Hauptrahmen (12);

einer Filmausgabeeinrichtung (18), die in vertikaler Stellung an dem Hauptrahmen (18) oberhalb des Montagerahmens (28) befestigt ist, wobei die Ausgabeeinrichtung (18) einen Speicher (22) zum Halten einer Mehrzahl von Filmblättern (16) und einen Mechanismus zum Ausgeben eines Filmblattes (16) nach unten durch eine Öffnung nahe dem Boden der Ausgabeeinrichtung aufweist und wobei

der Montagerahmen (28) an dem Hauptrahmen (12) um eine Kippachse (84) verschwenkbar befestigt ist, die horizontal durch die untere Hälfte des Montagerahmens (28) verläuft, um ein Kippen des oberen Endes des Montagerahmens (28) von einer aufrechten Stellung (28b) zurück in eine Auffangstellung (28a) zu ermöglichen, in der der Raum zwischen der Stützplatte (38) und der Frontplatte (36) mit der Öffnung ausgerichtet ist, um einen Film (16) hieraus aufzunehmen;

Federn (88), die so gegen den Montagerahmen (28) drücken, dass dieser zurück in die Auffangstellung (28a) kippt;

einer Welle (78), die drehbar an dem Montagerahmen (12) befestigt ist und einen Nocken (82) in einer Höhe oberhalb der Kippachse (84) trägt, wobei der Nocken (82) so bewegbar ist, dass er den Montagerahmen (28) in seine aufrechte Stellung (28b) drückt oder ein Zurückkippen des Montagerahmens (28) zulässt, wenn die Welle (78) in eine erste bzw. zweite Orientierung gedreht wird, und

wobei die Zugeinrichtung (72) an der Welle (78) befestigt ist und straff ist, wenn die Welle (78) zum Aufrichten des Montagerahmens (28) in die erste Orientierung gedreht wird, und die Spannung in der Zugeinrichtung (72) aufgehoben wird, wenn die Welle (78) zum Zurückkippen des Montagerahmens (28) in die zweite Orientierung gedreht wird, wodurch automatisch eine Trennung der Stützplatte (38) und der Frontplatte (36) zugelassen wird, wenn sie zum Auffangen eines Filmblattes (16) zurückgekippt werden.

4. Die Vorrichtung, wie in Anspruch 1 beansprucht, in der die gegenüberliegenden Ränder (40) der Frontplatte (36) um einen entsprechenden Stab (42) gewickelt sind, von denen jeder in einem Loch gehalten ist, das durch zwei Rillen (44, 46) gebildet wird, die in entsprechenden inneren und äusseren Stäben (48, 50) des Montagerahmens (28) gebildet sind.

5. Eine Vorrichtung für die Röntgenfotografie
wie in Anspruch 3 beansprucht,
die eine Abdeckung (27) aufweist, vor die ein Patient gestellt werden kann, von dessen Brustkorb eine Röntgenaufnahme gemacht werden soll und
bei der die Ausgabeeinrichtung (18) ferner eine Einrichtung zur Ausgabe jeweils eines Filmes (16) durch die Öffnung aufweist, welche Einrichtung zur Trennung der Verstärkerfolien (32, 34) und zu deren Verschwenkung um eine Achse (84) betätigbar ist, die unterhalb der Mitte der Verstärkerfolien (32, 34) liegt, um deren oberen Enden nach hinten in eine Stellung (28a) in Fluchtung mit der Öffnung zu verschieben, so dass ein Film (16) zwischen den Verstärkerfolien (32, 34) aufgenommen wird.

**Revendications**

1. Dispositif de radiophotographie comprenant: un bâti de montage 28, une plaque antérieure flexible 36, transparente aux rayons X, dont les côtés opposés 40 sont retenus dans le bâti de montage 28, une plaque d'appui 38 placée derrière la plaque antérieure 36 et normalement espacée de celle-ci, au moins un écran renforçateur 32, 34, placé entre la plaque antérieure 36 et la plaque de soutien 38 de manière à se trouver en contact face à face avec une feuille de film 16 et des moyens de pression qui retiennent le film 16 de façon serrée sur toute la surface de l'écran renforçateur 32, 34, caractérisé par le fait que les côtés opposés 40 de la plaque antérieure 36 sont retenus de telle sorte qu'ils sont empêchés de se mouvoir vers l'avant, par le fait que la plaque de soutien 38 est élastique et flexible et par le fait que les moyens de pression comprennent un premier élément allongé 56 placé derrière la plaque de soutien 38, parcourant la longueur de la plaque de soutien 38 de sorte que lorsque le premier élément allongé 56 est poussé vers la plaque de soutien 38, la plaque de soutien 38 est courbée en direction de l'écran renforçateur 32, 34 et le premier élément allongé 56 s'éloigne alors de la plaque de soutien 38 de sorte que le film 16 est libéré.

2. Dispositif selon la revendication 1, dans lequel le premier élément allongé 56 porte des galets 58, 60 à ses parties terminales et les moyens de pression comprennent en outre un deuxième élément allongé 62 s'appuyant contre les galets 58, 60 et supporté sur le bâti de montage 28 pour se mouvoir de façon inclinée tout en poussant sur les galets 58, 60 et des moyens 72 reliés au deuxième élément allongé 62 pour le tirer le long de l'extension des premier et deuxième éléments allongés 56, 62 et vers l'avant contre les galets 58, 60.

3. Dispositif selon la revendication 2, comprenant un bâti principal 12, un distributeur de film 18 monté verticalement sur le bâti principal 12 au-dessus du bâti de montage 28, ce distributeur 18 comportant un magasin 22 pour contenir plusieurs feuilles de film 16 et présentant un mécanisme pour distribuer une feuille de film 16 vers le bas à travers une ouverture proche du fond du distributeur, et dans lequel le bâti de montage 28 est monté de façon pivotante sur le bâti principal 12, autour d'un axe d'inclinaison 84 passant horizontalement à travers la moitié inférieure du bâti de montage 28 pour permettre à l'extrémité supérieure du bâti de montage 28 de s'incliner vers l'arrière d'une position dressée 28b à une position de réception dans laquelle l'espacement entre la plaque de soutien 38 et la plaque antérieure 36 est aligné sur l'ouverture de manière à en recevoir un film 16; des ressorts 88 pour solliciter le bâti de montage 28 à s'incliner vers l'arrière, à la position de réception 28a; un arbre 78 monté de façon pivotante sur le bâti principal 12 et portant une came 82 à un niveau supérieur à l'axe d'inclinaison 84, cette came 82 pouvant se mouvoir pour pousser le bâti de montage 28 à la position dressée 28b ou pour permettre au bâti de montage 28 de s'incliner vers l'arrière, respectivement lorsqu'on fait tourner l'arbre 78 à une première orientation ou à une deuxième orientation, et les moyens de traction 72 étant fixés à l'arbre 78 et tendus quand on fait tourner l'arbre 78 à la première orientation pour amener le bâti de montage 28 à la position dressée, et la tension des moyens de traction 72 se relâchant quand on fait tourner l'arbre 78 à la deuxième orientation pour incliner le bâti de montage 28 vers l'arrière de manière à permettre automatiquement la séparation de la plaque de soutien 38 et de la plaque antérieure 36 quand on les incline vers l'arrière pour recevoir une feuille de film 16.

4. Dispositif selon la revendication 1, dans lequel les côtés opposés 40 de la plaque antérieure 36 sont enroulés autour d'une tige correspondante 42, chacune de ces tiges étant retenue dans un trou formé par deux gorges 44, 46 formées respectivement dans des barres intérieure et extérieure 48, 50 du bâti de montage 28.

5. Dispositif selon la revendication 3, qui comprend un couvercle 27 en face duquel on peut placer un patient dont on radiographie le thorax, et dans lequel le distributeur 18 comprend aussi des moyens permettant de distribuer un film 16 à la fois à travers l'ouverture, moyens qui peuvent agir de manière à séparer les écrans renforçateurs 32, 34 et à les faire pivoter autour d'un axe 84 plus bas que le milieu des écrans renforçateurs 32, 34 pour déplacer vers l'arrière les extrémités supérieures de ceux-ci, à une position 28a alignée sur l'ouverture pour recevoir un film 16 entre les écrans renforçateurs 32, 34.

Fig.1

Fig.4

Fig.6

Fig. 1A

Fig. 2a

Fig. 2b

Fig. 2c

Fig. 2

Fig.3

Fig.5

Fig.8

Fig.13

Fig.14

Fig. 9

Fig. 15

Fig. 16

**Fig. 12**

**Fig. 10**

**Fig. 11**